# EUROPEAN PATENT SPECIFICATION

(11) **EP 1 695 764 B1**
(45) Date of publication and mention of the grant of the patent: **23.12.2009**
(21) Application number: 06075385.2
(22) Date of filing: 21.02.2006
(51) Int. Cl.: B02C 19/00, B02C 18/08, B02C 18/18

(54) **Device for breaking glassware**
Vorrichtung zum Brechen von Glasgegenständen
Dispositif pour le broyage d'objets en verre

(30) Priority: 23.02.2005 NL 1028384
(43) Date of publication of application: 30.08.2006
(73) Proprietor: Roose, Lucas Ignatius Maria, 4301 AD Zierikzee (NL)
(72) Inventor: Roose, Lucas Ignatius Maria, 4301 AD Zierikzee (NL)
(74) Representative: Hylarides, Paul Jacques

(56) References cited:
- DE-A1- 4 018 110
- DE-A1- 4 328 110
- DE-A1- 10 242 508
- GB-A- 2 030 472
- US-A- 2 558 255
- US-A- 3 713 596
- US-A- 5 242 126

## Description

The present invention relates to a device for breaking glassware for the purpose of reducing the volume taken up by the glassware.

Glassware which is used for packaging drinks and/or food products on the professional market must be disposed of and processed after use. A small part of used glassware can be taken back in undamaged state for a returnable charge. Another, relatively large part of the used glassware is however collected by waste collection services and processed centrally. Since used glassware is quite voluminous, the presenting of glassware to the waste collection services and having the waste collection services transport the glassware involves a great deal of effort and cost. In order to lighten the task of disposing of the glassware, glass-breaking devices, intended particularly for the professional market, are available. In these devices the used glassware is first broken before it is disposed of, which results in a considerable reduction in the volume taken up by the glassware.

A similar problem occurs in households. Much glass is also left over in the household which has been obtained without payment of a returnable charge and which can no longer be taken back. In order to dispose of this glassware, the glassware must be placed in the glass containers intended for this purpose. This glassware is however also quite bulky, so that a large volume of glass must be taken to the glass container after only a short time, this being perceived by many users as inconvenient. As a result a large part of the glassware is still presented as domestic waste to the refuse collection services.

From document NL 1 008 632 of applicant is known a breaking device particularly suitable for domestic use. The known breaking device comprises a cylindrical breaking chamber in which is arranged a breaking disc provided with protrusions. The disc is driven by an electric motor arranged in or under the breaking chamber and placed directly on the motor shaft extending parallel to the axis of the chamber. Although such a breaking device can be readily dimensioned for use on domestic scale and has seen frequent use in the past, the known device nevertheless has a number of drawbacks.

Because the electric motor is arranged in or under the breaking chamber, broken glassware moving downward can enter the interior of the motor, which greatly reduces the lifespan hereof.

A further drawback of a known device is that glassware inserted from the top side of the device enters the breaking chamber directly and is there immediately broken. The position in which the glassware, for instance a bottle, contacts the breaking disc can vary greatly here, which in such a case has an adverse effect on the efficiency of the breaking process.

A device for breaking glassware is known from the document DE 102 42 508 A1. This is a quite compact, mobile machine, provided on the top side with an elongate supply tube having thereunder a breaking chamber provided with one or more rotating arms. The glass shattered as a result of the rotating arms leaves the device on the underside via an outlet opening. The rotating arms are mounted on a rotary shaft positioned centrally under the supply tube. The drive motor of the arms is positioned under the breaking chamber. This known device therefore also has the drawback that the electric motor is arranged under the breaking chamber, so that downward moving broken glassware can enter the interior of the motor, which greatly reduces the lifespan thereof.

It is an object of the present invention to provide an improved device for breaking glassware, in which the above stated and other drawbacks of the prior art are obviated.

For this purpose a glass breaking device is provided for reducing the volume taken up by glassware, comprising a housing provided with:
- a breaking chamber, to the upper side of which is connected an elongate insertion tube for supplying glassware for breaking, and on the underside of which is provided an opening for discharging the broken glassware;
- a rotatable breaking element arranged in the breaking chamber for breaking the glassware supplied via the insertion tube;
- a drive shaft protruding into the breaking chamber, wherein the breaking element is arranged on top of the drive shaft;
- a drive motor disposed outside the breaking chamber for driving the rotatable breaking element,
wherein the drive motor is provided with a motor shaft extending substantially parallel to the drive shaft;
- coupling means for mutually coupling the motor shaft and drive shaft;
wherein the electric drive motor is disposed to the side of the breaking element, at the same height as the breaking chamber, and in that the outlet opening is provided on the underside of the breaking chamber, defining a substantially undeflected path from the insertion opening.

The lateral positioning of the drive motor prevents as far as possible downward falling slivers of the glassware entering the motor, which could result in serious damage to the motor. By moreover placing the drive shaft of the breaking element under the breaking element, an almost wholly continuous space is created in the breaking chamber above the breaking element, so further reducing the chance of "jamming" of the breaking element.

According to a preferred embodiment of the invention, the drive shaft and motor shaft are disposed vertically, so that a relatively slender housing can be provided.

According to a further preferred embodiment, the breaking element defines an elongate, flat form, on the insertion side of which are provided one or more entraining protrusions. The entraining protrusions prevent inserted glassware, such as bottles, from "dancing" on the rotating breaking element. The entraining protrusion provides for a first breaking of the inserted glass object, whereafter the rest of the breaking element ensures a further breaking of the object.

According to a further preferred embodiment, the breaking element defines an elongate, flat form, on the discharge side of which are provided one or more sweeping protrusions. The sweeping protrusions sweep left-behind slivers, labels and the like from the wall of the breaking chamber and discharge it via the discharge opening.

According to a preferred embodiment, the breaking chamber has a substantially constant diameter, so that accumulation of glass granulate is avoided. Such an accumulation is caused mainly by (sticky) liquids containing sugar.

According to a further preferred embodiment, the insertion tube protrudes into the breaking chamber over a predetermined distance (d), preferably 5 cm or more. This results on the one hand in a reduced resonance, and therefore a reduced sound radiation, and has on the other the advantage that little glass is thrown back, which enhances the safety of the breaking unit.

According to a further preferred embodiment, an outer end of the insertion tube is provided along at least a part of its peripheral edge with a flange. Tests have shown that such a flange has the effect of reducing the volume of the sound produced by the device. The flange functions as a sound damper in that the vibrations in the insertion tube are damped. The placing on the outer end of the insertion tube is advantageous since it has been found that the susceptibility to vibrations is highest there.

According to a further preferred embodiment, the flange extends through an angle of at least 90° from the position at which the glassware falls onto the breaking element. Tests have shown that such an embodiment of the flange makes possible a further reduction in the radiated acoustic power.

According to a further preferred embodiment, the breaking element is positioned centrally in the breaking chamber and is embodied to maintain a substantially constant intermediate distance (a) between the inner side of the breaking chamber and the outer edge of the breaking element during rotation. This constant intermediate distance ensures that the broken glassware leaves the breaking chamber on the underside with more certainty.

According to a further preferred embodiment, said intermediate distance (a) amounts to between 2.5 cm and 5 cm, preferably about 3 cm. Said intermediate distance increases slightly during use as a result of wear of the outer end of the breaking element.

According to a further preferred embodiment, the insertion tube extends obliquely relative to the breaking chamber. The result of the oblique position of the insertion tube is that the glassware contacts the breaking element in an oblique position, thereby increasing the chance of the glassware breaking on first contact with the breaking element. The chance of the glassware bouncing back up is moreover reduced, which enhances the safety of the breaking chamber.

According to a further preferred embodiment, the angle α amounts to between 80° and 90°, and more preferably to about 85°.

According to a further preferred embodiment, the lower outer end of the insertion tube is positioned eccentrically relative to the breaking chamber. As a result a better shattering is achieved, since the chance of the glassware being left to clatter on the breaking element is very small as a result of the resulting asymmetry.

According to a further preferred embodiment, elastic bands are provided around the outer side of the insertion tube and/or the breaking chamber. It has been found that during use of the device a pattern of standing waves occurs in the insertion tube. The pattern comprises wave antinodes and wave nodes, wherein the bands are provided at the position of the wave antinodes. The standing waves in the tube are hereby suppressed, which results in a considerable reduction in the radiated acoustic power.

According to a further preferred embodiment, the electric motor is provided with a motor brake for automatically braking the rotation of the motor shaft and the breaking element coupled thereto in the absence of supply voltage.

According to a further preferred embodiment, the device comprises detection means for detecting the presence of glassware in the insertion tube, wherein the detection means are coupled to the drive motor for switching off the drive motor after a predetermined period of time following detection of the glassware.

According to a further preferred embodiment, the housing is adapted to enable placing therein of a container for broken glassware, and weighing means are provided for a weight-based detection of the degree of filling of the container.

According to a further preferred embodiment, the diameter of the breaking chamber is a maximum of twice the diameter of the insertion tube. As a result hereof the diameter of the breaking element is also a maximum of twice the diameter of the insertion tube (wherein the insertion tube diameter is representative of the (maximum) diameter of the supplied glassware). Such a relatively small breaking element can be brought to sufficient speed in a relatively short time to enable efficient breaking of the glassware without a great danger of the breaking element jamming in the breaking chamber.

According to a further preferred embodiment, the combined height of the housing and the insertion tube amounts to at least 1.5 m. As a result the insertion opening of the insertion tube is positioned so high above the ground that only after climbing can an operative reach the breaking element with his hand. This provides a further protection against accidents.

According to a further preferred embodiment, the length of the insertion tube amounts to at least 0.4 m. At this distance there is a relatively small chance of broken glass being able to bounce back up above the insertion tube. A further advantage is that said minimum length increases the falling time of the inserted glassware to the breaking element sufficiently so that the swing-back flaps referred to below can close again on time. Finally, the breaking element is hard to reach with such a length of the insertion tube, which is positive from a safety viewpoint.

According to a further preferred embodiment, the insertion tube is provided on its upper end with swing-back flaps. These have the function of holding back upward bouncing pieces of glassware. The swing-back flaps can moreover be provided with detection means, as will be set forth below.

According to a further preferred embodiment, the breaking element defines a flat butterfly form. This form enhances the lifespan and the strength of the breaking element. Furthermore, the breaking element is hereby "self-sharpening", which means that the breaking element keeps itself sharp through use.

According to a further preferred embodiment, the coupling means comprise a chain transmission.

Further advantages, features and details of the present invention will be elucidated on the basis of the following description of the preferred embodiments. Reference is made in the description to the accompanying figures, in which:
figure 1 shows a perspective view of a first preferred embodiment of the invention;
figure 2 is a partly cut-away perspective view of the embodiment shown in figure 1;
figure 3 shows a partly cut-away detail view of the combined insertion-breaking unit;
figure 4 shows a bottom view of the breaking unit; and
figure 5 shows a perspective view of a further preferred embodiment of a breaking element according to the invention.

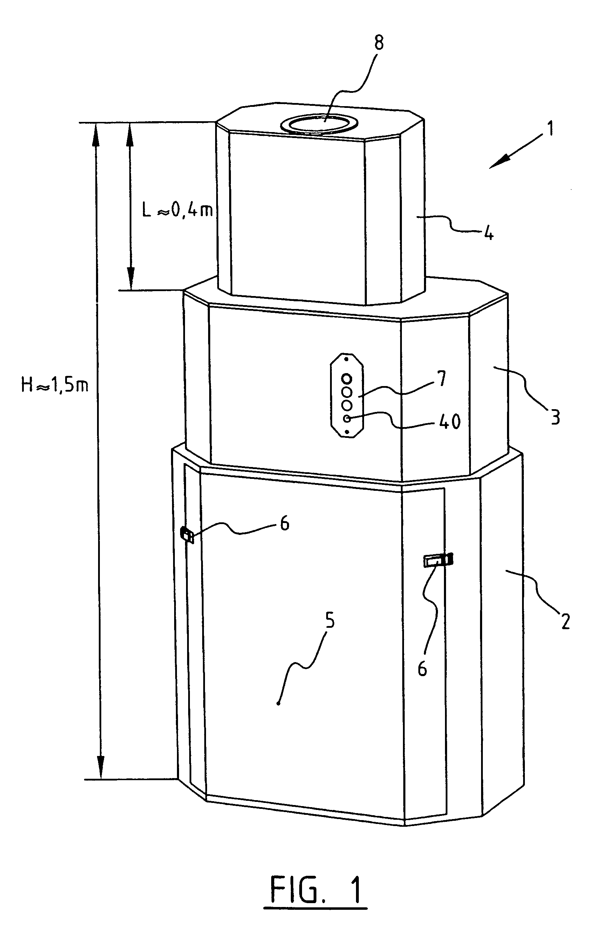

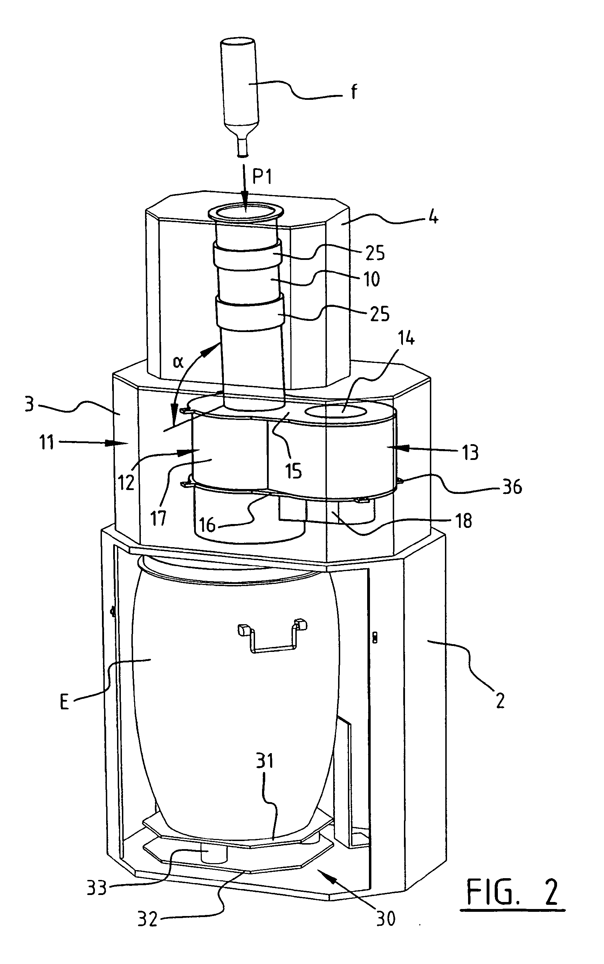

Figure 1 shows a preferred embodiment of a breaking device 1, which is constructed from a lower housing part 2, a middle housing part 3 and an upper housing part 4. The lower housing part 2 is provided with a door 5 which is fixed using a clamp 6. Door 5 can be easily removed, whereby a collecting space provided in the lower housing part 1 becomes accessible from the outside (figure 2). A granulate barrel (E) in which the broken glassware is collected can be placed in the collecting space.

The middle housing part 3 is provided with a control panel 7 with which the device can be operated by a user. Control panel 7 is connected to a control unit, for instance a programmable microcontroller. The control unit can operate, among other parts, the drive motor to be described hereinbelow.

Provided on the top side of upper housing part 4 is an insertion opening 8, along which the glassware for breaking, in particular bottles (F), can be inserted in downward direction (P₁, figure 2).

Figure 2 shows the internal parts of device 1. In upper housing part 4 and a part of middle housing part 3 is arranged an insertion unit which consists of, among other parts, an elongate, cylindrical insertion tube 10. The diameter of the insertion tube is slightly larger than that of the pieces of glass. In the shown embodiment insertion tube 10 is only slightly larger than the outer periphery of the inserted bottles, whereby the bottles reach the breaking unit to be described below in the desired position, i.e. upright and preferably with the neck directed downward.

Breaking unit 11 is arranged in middle part 3 of the housing and comprises a breaking chamber 12 on the left-hand side and a motor compartment 13 on the righthand side. Breaking unit 11 is constructed from an upright curved tube wall 17, which is closed at the top with an upper closing element 15 and is closed on the underside with a lower closing element 16. Closing elements 15 and 16 are provided with fixing tongues 36. The tongues 36 provided on closing plate 16 are fixed to housing part 3 via per se known vibration dampers.

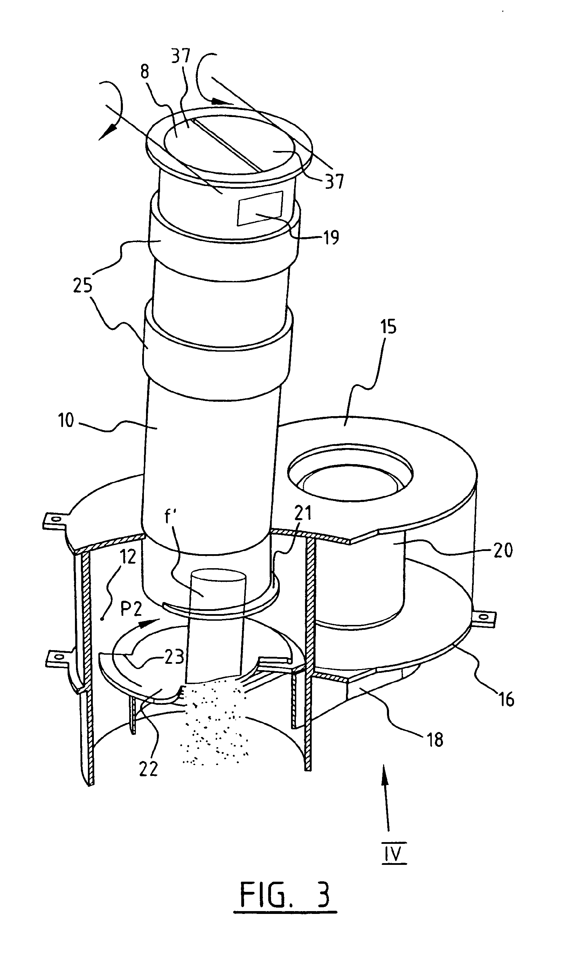

As stated above, a motor compartment 13 is situated to the right of breaking unit 11. In this compartment is arranged an electric motor 20, as is shown in more detail in figure 3. Electric motor 20 is connected to an internal power source (for instance a battery) or to an external power source (for instance the domestic mains electricity supply). Electric motor 20 is of a type which is provided with a brake. This means that when a supply voltage is switched off, electric motor 20 and the further elements optionally mounted thereon, such as the breaking element to be described hereinbelow, come to a standstill within a very short time period (typically within 1 second).

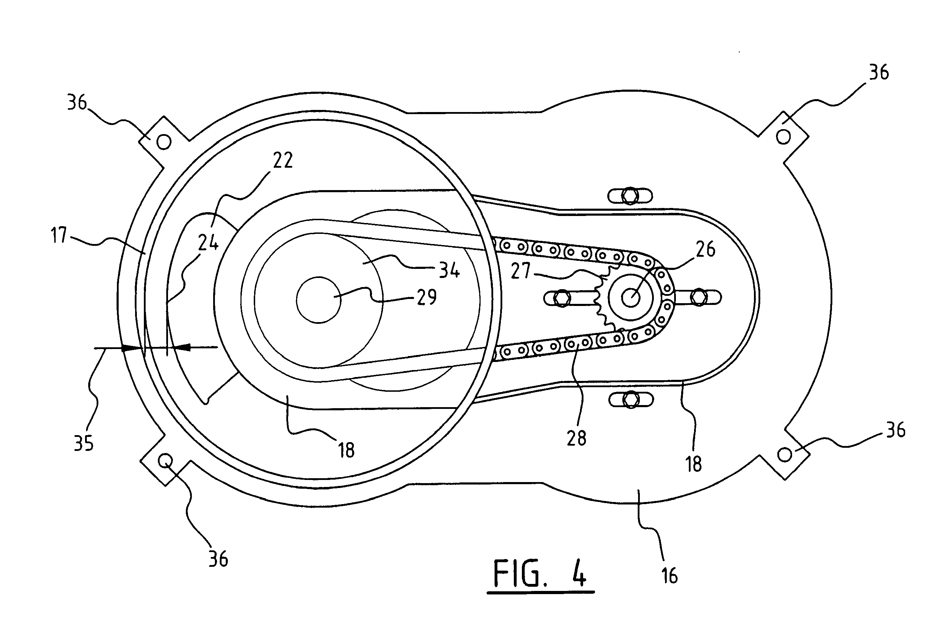

Arranged in closing element 15 is an air feed opening 14, via which cooling air can reach motor compartment 13. Electric motor 20 is provided on the underside with a motor shaft 26, as shown in more detail in figure 4. This motor shaft 26 is provided at one end with a relatively small toothed wheel 27 on which engages a drive chain 28.

As stated above, a breaking chamber 12 is provided on the left-hand side of breaking unit 11. Provided in the breaking chamber is a vertical drive shaft 29, on the top of which is arranged a breaking element 22. Drive shaft 29 is mounted rotatably (rotation direction P2) on a flange 18 arranged on the underside of closing element 16. Provided on the end of drive shaft 29 is a relatively large toothed wheel 34 on which the above stated chain 28 can engage.

Breaking element 22 has a flat butterfly form and is manufactured from hard material, such as steel, which can withstand glass shards moving at a high radial speed. Breaking element 22 is further provided with edges, whereby at a sufficiently high rotation speed the glassware, in particular bottle F' (figure 3), can be shattered with great certainty. The diameter of the breaking element is in the order of magnitude of 100 to 200 mm (at a diameter of the breaking chamber between 200 and 400 mm).

During use the bottle F is placed from above into insertion opening 8 and then released. Bottle F pushes swing-back flap 37 downward, thereby gaining access to insertion tube 10. Bottle F drops downward under the influence of gravity (direction P₁). In the downward folded position the swing-back flaps 37 activate a detector 19 shown schematically in the figures. Detector 19 detects the presence or at least the passage of glassware and immediately switches on electric motor 20 via the control unit. Electric motor 20 drives chain 28 and drive shaft 29 of breaking element 22 via motor shaft 26. After a relatively short start-up time the motor, and thereby breaking element 22, reaches full speed, so that a sufficiently high rotation speed is created to shatter bottle F' efficiently and quickly. The shattered glassware falls downward in the form of slivers (g) or shards (depending on the tool and the transmission ratio) and is collected in the exchangeable granulate barrel (E).

The length (L) of insertion tube 10 has a chosen length (typically about 0.4 m or more) such that the bottle reaches breaking chamber 12 only after at least the above stated start-up time. In other words, when bottle F has moved into breaking chamber 12 under the influence of gravity, breaking element 22 has meanwhile already reached a sufficiently high rotation speed to shatter the bottle.

Motor 20 is further switched off by the control unit a short time after the detection of the glassware by detector 19, for instance within 8 seconds of the first detection. This means that, when bottle F' is broken completely, the supply voltage is automatically removed from the motor, and the motor including the coupled breaking element 22 quickly comes to a standstill.

In the shown embodiment the insertion tube 10 is arranged at a slight incline relative to breaking chamber 12. The angle of inclination α preferably amounts to between 80° and 90°, but can also be smaller. As a result inserted glassware will contact the top side of breaking element 22 in a slightly inclining position. Particularly when the glassware consists of bottles, which bottles sometimes have a relatively great glass thickness, this oblique descent of the glassware onto the breaking element ensures a reduced chance of jamming of the breaking element.

Figure 4 shows that the distance A between the inner side 35 of upright wall 17 of breaking unit 11 and outer wall 24 of breaking element 22 is more or less constant in the shown embodiment, so that an annular opening of substantially constant thickness always remains for discharge of the broken glassware. An advantage hereof is that a rapid discharge of the granulate and the smallest possible accumulation thereof can be realized.

The granulate is not however ground too finely, since glassware which is ground too finely can no longer be separated afterward, or hardly so, which makes recycling of the glassware more difficult. Too coarse a grinding of the glassware defeats the object of the device, i.e. to reduce the space taken up by the glassware. The largest dimensions of the broken particles of the granulate lie typically in the order of magnitude of several centimetres, in particular between 1 and 9 cm, and preferably between 2 cm and 8 cm.

An important aspect of a breaking device for domestic use is that it must be relatively quiet. A number of measures are taken to reduce the acoustic power generated during use of the device. Firstly, the housing of breaking device 1 is manufactured from wood, in particular MDF. This material provides for a certain amount of damping in the housing, so that additional measures such as absorbent material inside the housing can be omitted. Along the outer periphery of insertion tube 10 is further arranged a number of elastic bands 25 (in the shown embodiment two, but in practice this can be more or fewer). By arranging these bands 25 at the correct positions along the tube surface, as stated above, a considerable reduction in the amplitude of the standing waves in tube 10 can be achieved, which means a considerable reduction in the radiated acoustic power. With the same purpose a flange 21 is provided on the underside of insertion tube 10. The arranging of mass at a free end of the insertion tube results in a damping of the vibrations in the insertion tube, and thereby a reduction in the radiated acoustic power. This reduction is caused partly by an irregular shape of the flange on the insertion tube.

Figure 2 shows that the glassware barrel (E), in which the broken glassware is collected, is placed on a weighing mechanism 30. Weighing mechanism 30 comprises a lower plate 32, an upper plate 31 and a weighing element 33 arranged therebetween. In a manner not shown the weighing element 32 generates an electrical signal which is representative of the weight of barrel E arranged on plate 31. In the shown embodiment the weighing element only generates an electrical signal when a determined weight has been reached. In other embodiments the weighing element generates a signal which for instance corresponds to the weight. The generated signal, which is representative of the weight of barrel E with contents and therefore for the degree of filling thereof, is processed by the above mentioned control unit. When the control unit has determined that the barrel (E) has been filled to a sufficient degree, the unit generates a signal, for instance by turning on a LED 40 on control panel 7. This tells the user that the barrel must be replaced. The control unit can also be adapted to switch motor 20 on again only when a maximally filled barrel E has been replaced by an empty barrel. In determined other embodiments this is however left to the user himself, and the breaking process can continue irrespective of the degree of filling of barrel E.

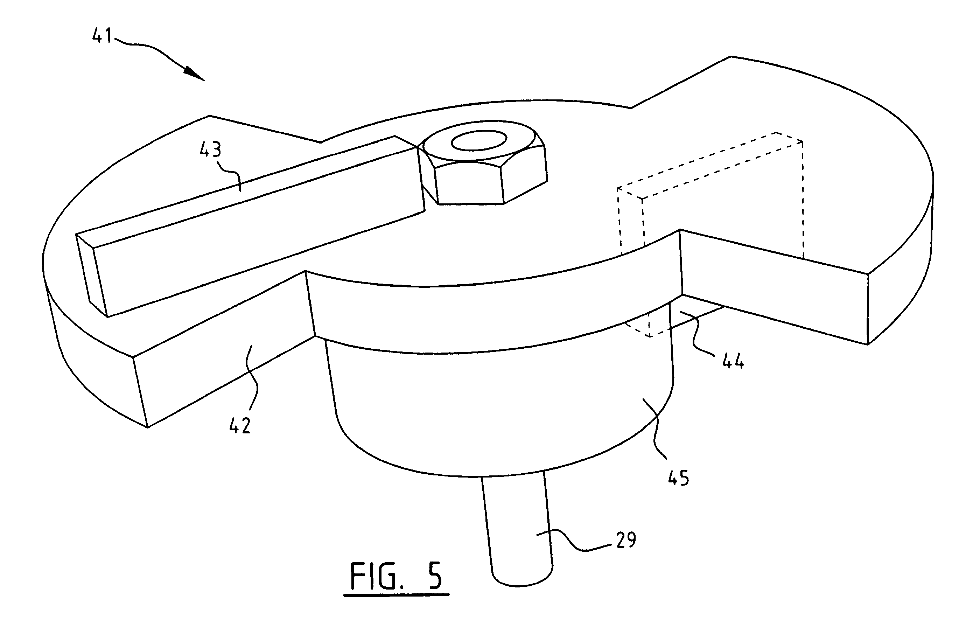

Figure 5 shows a further embodiment of a breaking element 41 according to the invention. Breaking element 41 comprises a substantially butterfly-shaped tool blade 42, on the top side of which is provided a protruding part or entraining protrusion 43 and on the underside of which is provided a protruding part or sweeping protrusion 44. Tool blade 42 is mounted on drive shaft 29 using fixing bush 45. The upper entraining protrusion 43 is constructed from a radially extending, elongate steel strip which provides for a reduced chance of glassware "dancing" on top of the rotating tool blade. The strip provides for a first breaking of the inserted glass object so that the object falls apart into smaller pieces. The smaller pieces are then broken by the tool blade itself until slivers or shards of the desired dimensions are provided. Sweeping protrusion 44 likewise consists of a metal strip. The strip can extend in radial direction or can be placed more obliquely in order to sweep away glass slivers possibly accumulating at the bottom of the breaking chamber during the rotating movement of the tool blade and discharge them via the outlet of the breaking chamber.

The present invention is not limited to the described preferred embodiments thereof. The rights sought are defined by the following claims, within the scope of which many modifications can be envisaged.

## Claims

1. Glass-breaking device (1) for reducing the volume taken up by glassware, comprising a housing provided with:
- a breaking chamber (12), to the upper side of which is connected an elongate insertion tube (10) for supplying glassware for breaking, and comprising an opening on the underside of the breaking chamber for discharging the broken glass;
- a rotatable breaking element (22, 23) arranged in the breaking chamber for breaking the glassware supplied via the insertion tube;
- a drive shaft (29) protruding into the breaking chamber, wherein the breaking element is arranged on top of the drive shaft;
- a drive motor (20) disposed outside the breaking chamber for driving the rotatable breaking element, wherein the drive motor is provided with a motor shaft (26) extending substantially parallel to the drive shaft;
- coupling means (27, 28, 34) for mutually coupling the motor shaft and drive shaft;
**characterized in that**:
- said electric drive motor is disposed to the side of the breaking element, at the same height as the breaking chamber; and
- **in that** the opening is provided on the underside of the breaking chamber, defining a substantially undeflected path from the insertion opening.

2. Device as claimed in claim 1, wherein the drive shaft and motor shaft are disposed vertically.

3. Device as claimed in claim 1 or 2, wherein the breaking element defines an elongate, flat form, on the insertion side of which are provided one or more entraining protrusions.

4. Device as claimed in any of the foregoing claims, wherein the breaking element defines an elongate, flat form, on the discharge side of which are provided one or more sweeping protrusions.

5. Device as claimed in claim 4, wherein the bottom wall of the breaking chamber and the sweeping protrusions are positioned relative to each other such that during use the sweeping protrusions sweep clean the lower part of the breaking chamber.

6. Device as claimed in claim 1 or 2, wherein the insertion tube protrudes into the breaking chamber over a predetermined distance (d), preferably at least 5 cm.

7. Device as claimed in claim 3 or 4, wherein an outer end of the insertion tube is provided along at least a part of its peripheral edge with a flange, wherein the flange preferably extends through an angle of at least 90° from the position at which the glassware falls onto the breaking element.

8. Device as claimed in any of the foregoing claims, wherein the breaking element is positioned centrally in the breaking chamber and is embodied to maintain a substantially constant intermediate distance (a), preferably between 2.5 cm and 5 cm, more preferably about 3 cm, between the inner side of the breaking chamber and the outer edge of the breaking element during rotation.

9. Device as claimed in any of the foregoing claims, wherein the insertion tube extends obliquely relative to the breaking chamber, wherein the angle α preferably amounts to between 80' and 90°, more preferably to about 85°.

10. Device as claimed in any of the foregoing claims, wherein the lower outer end of the insertion tube is positioned eccentrically relative to the breaking chamber.

11. Device as claimed in any of the foregoing claims, wherein elastic bands are provided around the outer side of the insertion tube and/or the breaking chamber.

12. Device as claimed in any of the foregoing claims, comprising detection means for detecting the presence of glassware in the insertion tube, wherein the detection means are coupled to the drive motor for switching off the drive motor after a predetermined period of time following detection of the glassware.

13. Device as claimed in any of the foregoing claims, wherein the diameter of the breaking chamber is a maximum of twice the diameter of the insertion tube.

14. Device as claimed in any of the foregoing claims, wherein the combined height of the housing and the insertion tube amounts to at least 1.5 m, wherein the length of the insertion tube amounts to at least 0.4 m.

15. Device as claimed in any of the foregoing claims, wherein the breaking element defines a flat butterfly form.

16. Device as claimed in any of the foregoing claims, which comprises one or more swing-back flaps arranged on or in the insertion tube for allowing passage of the unbroken glassware in a first direction and preventing passage of broken glassware in the opposite direction.

17. Device as claimed in claims 14 and 23, wherein the detection means are coupled to one or more of the swing-back flaps.

## Patentansprüche

1. Glasbrechvorrichtung (1) zum Reduzieren des Volumens, welches durch Glaswaren eingenommen wird, mit einem Gehäuse, welches Folgendes aufweist:
- eine Brechkammer (12), mit dessen oberer Seite ein längliches Einfügungsrohr (10) zum Zuführen der zu brechenden Glaswaren verbunden ist und die eine Öffnung an der Unterseite der Brechkammer zum Auslassen des gebrochenen Glases aufweist;
- ein drehbares Brechelement (22, 23), das in der Brechkammer zum Brechen der Glaswaren angeordnet ist, die über das Einfügungsrohr zugeführt werden;
- eine Antriebswelle (29), die in die Brechkammer hinein ragt, wobei das Brechelement an der Spitze der Antriebswelle angeordnet ist;
- einen Antriebsmotor (20), der außerhalb der Brechkammer zum Antreiben des drehbaren Brechelements angeordnet ist, wobei der Antriebsmotor mit einer Motorwelle (26) versehen ist, die sich im Wesentlichen parallel zu der Antriebswelle erstreckt;
- eine Kopplungseinrichtung (27, 28, 34) zum gegenseitigen Koppeln der Motorwelle und der Antriebswelle;
**dadurch gekennzeichnet, dass**:
- der elektrische Antriebsmotor an der Seite des Brechelements auf derselben Höhe wie die Brechkammer angeordnet ist; und
- die Öffnung an der Unterseite der Brechkammer vorgesehen ist, wodurch ein im Wesentlichen nicht abgelenkter Pfad von der Einfügungsöffnung definiert ist.

2. Vorrichtung gemäß Anspruch 1, wobei die Antriebswelle und die Motorwelle vertikal angeordnet sind.

3. Vorrichtung gemäß Anspruch 1 oder 2, wobei das Brechelement eine längliche, flache Form definiert, an deren Einfügungsseite ein oder mehrere Mitnehmer-Vorsprünge vorgesehen sind.

4. Vorrichtung gemäß einem der vorherigen Ansprüche, wobei das Brechelement eine längliche, flache Form definiert, an deren Auslassseite ein oder mehrere Fege-Vorsprünge vorgesehen sind.

5. Vorrichtung gemäß Anspruch 4, wobei die Bodenwand der Brechkammer und die Fege-Vorsprünge derart relativ zueinander positioniert sind, dass während der Benutzung die Fege-Vorsprünge den unteren Teil der Brechkammer sauber fegen.

6. Vorrichtung gemäß Anspruch 1 oder 2, wobei das Einfügungsrohr in die Brechkammer über eine vorbestimmte Distanz (d) und vorzugsweise zumindest über 5 cm hinein ragt.

7. Vorrichtung gemäß Anspruch 3 oder 4, wobei ein äußeres Ende des Einfügungsrohrs zumindest entlang eines Teils seiner Umfangskante mit einem Flansch versehen ist, wobei sich der Flansch vorzugsweise über einen Winkel von mindestens 90° von der Position erstreckt, an der die Glaswaren auf das Brechelement fallen.

8. Vorrichtung gemäß einem der vorherigen Ansprüche, wobei das Brechelement in der Brechkammer zentral positioniert und so ausgeführt ist, dass eine im Wesentlichen konstante, mittlere Distanz (a) vorzugsweise zwischen 2,5 cm und 5 cm und weiter bevorzugt von ungefähr 3 cm zwischen der Innenseite der Brechkammer und der äußeren Kante des Brechelements während einer Drehung aufrecht erhalten wird.

9. Vorrichtung gemäß einem der vorherigen Ansprüche, wobei sich das Einfügungsrohr relativ zu der Brechkammer schräg erstreckt, wobei der Winkel α vorzugsweise zwischen 80° und 90° und weiter bevorzugt ungefähr 85° beträgt.

10. Vorrichtung gemäß einem der vorherigen Ansprüche, wobei das untere äußere Ende des Einfügungsrohrs relativ zu der Brechkammer exzentrisch positioniert ist.

11. Vorrichtung gemäß einem der vorherigen Ansprüche, wobei elastische Bänder um die äußere Seite des Einfügungsrohrs und/oder der Brechkammer vorgesehen sind.

12. Vorrichtung gemäß einem der vorherigen Ansprüche, mit einer Erfassungseinrichtung zum Erfassen des Vorhandenseins der Glaswaren in dem Einfügungsrohr, wobei die Erfassungseinrichtung an dem Antriebsmotor gekoppelt ist, um den Antriebsmotor nach einer vorbestimmten Zeitperiode nach Erfassung der Glaswaren auszuschalten.

13. Vorrichtung gemäß einem der vorherigen Ansprüche, wobei der Durchmesser der Brechkammer maximal das Zweifache des Durchmessers des Einfügungsrohrs beträgt.

14. Vorrichtung gemäß einem der vorherigen Ansprüche, wobei die kombinierte Höhe des Gehäuses und des Einfügungsrohrs mindestens 1,5 m beträgt, wobei die Länge des Einfügungsrohrs mindestens 0,4 m beträgt.

15. Vorrichtung gemäß einem der vorherigen Ansprüche, wobei das Brechelement eine flache Schmetterlingsform definiert.

16. Vorrichtung gemäß einem der vorherigen Ansprüche, die eine oder mehrere Rückschwingklappen aufweist, die an oder in dem Einfügungsrohr angeordnet sind, um einen Durchlass der nicht gebrochenen Glaswaren in einer ersten Richtung zu erlauben und einen Durchlass der gebrochenen Glaswaren in der entgegen gesetzten Richtung zu verhindern.

17. Vorrichtung gemäß Ansprüchen 14 und 23, wobei die Erfassungseinrichtung an eine oder mehrere der Rückschwingplatten gekoppelt ist.

## Revendications

1. Dispositif de broyage de verre (1) pour réduire le volume pris par des objets en verre, comprenant un boîtier prévu avec :
une chambre de broyage (12) sur le côté supérieur duquel est raccordé un tube d'insertion allongé (10) pour alimenter les objets en verre pour le broyage, et comprenant une ouverture sur la face inférieure de la chambre de broyage afin de décharger le verre broyé ;
un élément de broyage rotatif (22, 23) agencé dans la chambre de broyage pour broyer les objets en verre alimentés via le tube d'insertion ;
un arbre d'entraînement (29) faisant saillie dans la chambre de broyage, dans lequel l'élément de broyage est agencé sur la partie supérieure de l'arbre d'entraînement ;
un moteur d'entraînement (20) disposé à l'extérieur de la chambre de broyage pour entraîner l'élément de broyage rotatif, dans lequel le moteur d'entraînement est prévu avec un arbre de moteur (26) s'étendant de manière sensiblement parallèle à l'arbre d'entraînement ;
des moyens de couplage (27, 28, 34) pour coupler mutuellement l'arbre de moteur et l'arbre d'entraînement ;
**caractérisé en ce que** :
ledit moteur d'entraînement électrique est disposé sur le côté de l'élément de broyage, à la même hauteur que la chambre de broyage ; et
**en ce que** l'ouverture est prévue sur la face inférieure de la chambre de broyage, définissant une trajectoire sensiblement non déviée à partir de l'ouverture d'insertion.

2. Dispositif selon la revendication 1, dans lequel l'arbre d'entraînement et l'arbre de moteur sont disposés verticalement.

3. Dispositif selon la revendication 1 ou 2, dans lequel l'élément de broyage définit une forme plate allongée sur le côté d'insertion duquel sont prévues une ou plusieurs saillies d'entraînement.

4. Dispositif selon l'une quelconque des revendications précédentes, dans lequel l'élément de broyage définit une forme plate allongée, sur le côté de décharge duquel sont prévues une ou plusieurs saillies de balayage.

5. Dispositif selon la revendication 4, dans lequel la paroi inférieure de la chambre de broyage et les saillies de balayage sont positionnées les unes par rapport aux autres de sorte que pendant l'utilisation, les saillies de balayage balaient la partie inférieure de la chambre de broyage.

6. Dispositif selon la revendication 1 ou 2, dans lequel le tube d'insertion fait saillie dans la chambre de broyage sur une distance prédéterminée (d), de préférence d'au moins 5 cm.

7. Dispositif selon la revendication 3 ou 4, dans lequel une extrémité externe du tube d'insertion est prévue le long d'au moins une partie de son bord périphérique avec un rebord, dans lequel le rebord s'étend de préférence sur un angle d'au moins 90° à partir de la position dans laquelle les objets en verre tombent sur l'élément de broyage.

8. Dispositif selon l'une quelconque des revendications précédentes, dans lequel l'élément de broyage est positionné au centre dans la chambre de broyage et est mis en oeuvre pour maintenir une distance intermédiaire (a) sensiblement constante, de préférence entre 2,5 cm et 5 cm, encore de préférence à environ 3 cm, entre le côté interne de la chambre de broyage et le bord externe de l'élément de broyage pendant la rotation.

9. Dispositif selon l'une quelconque des revendications précédentes, dans lequel le tube d'insertion s'étend de manière oblique par rapport à la chambre de broyage, dans lequel l'angle α est de préférence compris entre 80° et 90°, encore de préférence environ 85°.

10. Dispositif selon l'une quelconque des revendications précédentes, dans lequel l'extrémité externe inférieure du tube d'insertion est positionnée de manière excentrique par rapport à la chambre de broyage.

11. Dispositif selon l'une quelconque des revendications précédentes, dans lequel on prévoit des bandes élastiques autour du côté externe du tube d'insertion et/ou de la chambre de broyage.

12. Dispositif selon l'une quelconque des revendications précédentes, comprenant des moyens de détection pour détecter la présence d'objets en verre dans le tube d'insertion, dans lequel les moyens de détection sont couplés au moteur d'entraînement pour arrêter le moteur d'entraînement après une période de temps prédéterminée, suite à la détection des objets en verre.

13. Dispositif selon l'une quelconque des revendications précédentes, dans lequel le diamètre de la chambre de broyage représente au maximum deux fois le diamètre du tube d'insertion.

14. Dispositif selon l'une quelconque des revendications précédentes, dans lequel la hauteur combinée du boîtier et du tube d'insertion s'élève à au moins 1,5 m, dans lequel la longueur du tube d'insertion s'élève à au moins 0,4 m.

15. Dispositif selon l'une quelconque des revendications précédentes, dans lequel l'élément de broyage définit une forme plate de papillon.

16. Dispositif selon l'une quelconque des revendications précédentes, qui comprend un ou plusieurs volets à basculement arrière agencés sur ou dans le tube d'insertion pour permettre le passage des objets en verre non broyés dans une première direction et empêcher le passage des objets en verre broyés dans la direction opposée.

17. Dispositif selon les revendications 14 et 23, dans lequel les moyens de détection sont couplés à un ou plusieurs des volets à basculement arrière.
